# EUROPÄISCHE PATENTSCHRIFT

(11) **EP 1 541 315 B1**
(45) Veröffentlichungstag und Bekanntmachung des Hinweises auf die Patenterteilung: **17.09.2008**
(21) Anmeldenummer: 03028315.4
(22) Anmeldetag: 09.12.2003
(51) Int. Cl.: H02K 15/12, B29C 41/02, B29C 41/12, B29C 47/00, B29C 45/04, B29C 45/14

(54) **Verfahren und Werkzeugsystem zur Herstellung einer dünnwandigen Isolation, sowie damit hergestellte dünnwandige Isolation**
Process and tooling system for the manufacture of a thin-walled insulating structure, and thin-walled insulating structure obtained thereby
Procédé et système d'outillage pour la fabrication d'une structure isolante à parois mince, et structure isolante à parois mince obtenue

(43) Veröffentlichungstag der Anmeldung: 15.06.2005
(73) Patentinhaber: Kämpf, Gerhard, 91126 Schwabach (DE)
(72) Erfinder: Kämpf, Gerhard, 91126 Schwabach (DE)
(74) Vertreter: Lösch, Christoph Ludwig Klaus

(56) Entgegenhaltungen:
- EP-A- 0 664 195
- DE-A- 2 213 061
- GB-A- 777 858
- JP-A- 5 015 120
- JP-A- 6 245 415
- JP-A- 9 294 342
- US-A- 4 468 435
- US-A- 5 753 159
- PATENT ABSTRACTS OF JAPAN vol. 018, no. 229 (M-1598), 26. April 1994 (1994-04-26) -& JP 06 023770 A (I S T:KK), 1. Februar 1994 (1994-02-01)
- PATENT ABSTRACTS OF JAPAN vol. 013, no. 418 (M-871), 18. September 1989 (1989-09-18) -& JP 01 156017 A (NITTO DENKO CORP), 19. Juni 1989 (1989-06-19)

## Beschreibung

Die Erfindung betrifft ein Verfahren zur Herstellung einer dünnwandigen Isolation aus urformbarem Material durch Relativbewegung eines ersten und eines weiteren formgebenden Werkzeugs zueinander. Ferner betrifft die Erfindung ein nach einem derartigen Verfahren hergestellte dünnwandige Isolation sowie ein Werkzeugsystem zur Herstellung einer dünnwandigen Isolation nach einem derartigen Verfahren.

Als Stand der Technik ist zur Herstellung von dünnwandigen Bauteilen u.a. das Spritzgußverfahren zur Herstellung von Kunststoffteilen bekannt. Ein Nachteil dieses Verfahrens liegt darin, daß aufgrund eingeschränktem Fließverhalten trotz Zugabe von Fließhilfen nur Bauteile mit einer begrenzten Länge hergestellt werden können.

Aus JP 06245415 geht ein aus Blechen aufgebauter Stator für einen Elektromotor sowie ein Herstellverfahren für diesen hervor. Zur Isolation der einzelnen Ständerbleche untereinander wird in den Stator eine Innenform eingebracht, die den gesamten Innenhohlraum und die innenliegenden Nuten des Stators ausfüllt. Anschließend werden die Zwischenräume der Ständerbleche mit Schutzlack ausgefüllt und die Innenform entfernt.

JP 05015120 offenbart eine zweiteilige Spritzgussform zur Herstellung einer Statorummantelung, wobei eine Formhälfte einen zylinderförmigen Abschnitt mit Nuten an dessen Mantelfläche besitzt. Zum Umspritzen der Ständerbleche werden diese in den Forminnenraum eingebracht und die Spritzgussform geschlossen.

Aus JP 09294342 geht ein Herstellverfahren für einen Stator hervor, der die Ausbildung von Wirbelströmen unterdrückt. Hergestellt wird dieser Stator aus Partikeln aus magnetischem Material, die mit einer Isolationsschicht aus Harz ummantelt sind. Diese Partikel werden mit Gießharz gemischt, in eine Gussform eingebracht und unter Druck- und Wärmeeinwirkung kompaktiert.

Der Erfindung liegt die Aufgabe zugrunde, ein Verfahren, eine Isolation und ein Werkzeugsystem anzubieten, mit welchem zuverlässig auch dünnwandige Bauteile mit geringen Schichtdicken hergestellt werden können.

Diese Aufgabe wird durch ein Verfahren mit den Merkmalen des Patentanspruchs 1 realisiert. Für die Isolation wird die Aufgabe durch die Merkmale des Patentanspruchs 8 und für das Werkzeugsystem durch die Merkmale der Patentansprüche 9 und 10 gelöst.

Beim erfindungsgemäßen Verfahren wird zunächst ein Hohlraum eines im ersten formgebenden Werkzeug eingelegten weiteren Bauteils oder ein Hohlraum des ersten formgebenden Werkzeugs mit fließfähigem (z.B. geschmolzenem) urformbaren Material gefüllt. In einem zweiten Verfahrensschritt erfolgt eine Relativbewegung des ersten und des weiteren formgebenden Werkzeugs zueinander, wobei eine teilweise Verdrängung des urformbaren Materials stattfindet und ein gewünschter dünnwandiger Bereich aus urformbarem Material zwischen einem Außenwandbereich des weiteren formgebenden Werkzeugs und einem Innenwandbereich des Hohlraums (des eingelegten weiteren Bauteils oder des ersten formgebenden Werkzeugs) stattfindet.

Als urformbare Materialien können u.a. Thermoplastschmelzen, Metallschmelzen und/oder fließfähige Reaktionsharze verwendet werden. Diese Materialien können zusätzlich mit Füllstoffen, Verstärkungsstoffen (z.B. keramischen Elementen, Glasfasern, Kohlefasern) angereicht sein.

Im Gegensatz zu einem Spritzgußverfahren nach dem Stand der Technik können Bauteile mit extremer Dünnwandigkeit praktisch unbegrenzter Bauteillänge hergestellt werden, da durch den zweiten Verfahrensschritt der teilweisen Verdrängung des urformbaren Materials ein genau quantifizierbarer Materialabtrag erfolgen kann. Ferner wird der zu befüllende Hohlraum im ersten Verfahrensschritt vollständig oder teilweise gefüllt, ohne daß hinsichtlich der Länge des Hohlraums eine verfahrensbeschränkende Grenze besteht.

Gemäß einer ersten Verfahrensvariante kann das urformbare Material den Hohlraum nach dem Befüllen überwiegend oder vollständig ausfüllen.

Nach einer weiteren Verfahrensvariante kann das urformbare Material den Hohlraum nach dem Befüllen teilweise ausfüllen.

Bei der Verdrängung des urformbaren Materials durch die Relativbewegung des ersten und des weiteren formgebenden Werkzeugs zueinander wird bei einer vollständigen Ausfüllung des Hohlraums mit urformbarem Material sämtliches bei der Ausbildung der dünnen Wandschicht des dünnwandigen Bauteils nicht mehr benötigtes Material abgetragen, verdrängt und gegebenenfalls einer weiteren (erneuten) Verwertung zugeführt.

Bei einem nur teilweise ausgefüllten Hohlraum kann durch gegenseitige Annäherung des ersten und des weiteren formgebenden Werkzeugs ein Film des urformbaren Materials in einen Spaltbereich zwischen Innenwandbereich des Hohlraums und Außenwandbereich des weiteren formgebenden Werkzeugs hineingezogen werden.

Die angestrebte dünne Wandung des dünnwandigen Bauteils entsteht somit während der Relativbewegung des ersten und des weiteren formgebenden Werkzeugs zueinander in einem Spaltbereich zwischen Innenwandbereich des Hohlraums und Außenwandbereich des weiteren formgebenden Werkzeugs mit dem urformbaren Material.

Generell kann bei sämtlichen Verfahrensvarianten eine Nacheinspeisung von zusätzlichem urformbaren Material erfolgen, um an jedem gewünschten Ort urformbares Material während des Verfahrens zuführen zu können.

Beim erfindungsgemäßen Verfahren wird das geschilderte Verfahren zur Einbringung von dünnwandigen Isolationen aus urformbarem Material in Nuten von Ständerblechen einer elektrischen Maschine verwendet. Dabei werden die Nuten einer Mehrzahl von im ersten formgebenden Werkzeug hintereinander angeordneten Ständerblechen befüllt. Diese Nuten bilden in ihrer Aneinanderreihung einen befüllbaren länglichen Hohlraum.

Mit dem beschriebenen erfindungsgemäßen Verfahren wird es ermöglicht, die Nuten einer Vielzahl von hintereinander angeordneten Ständerblechen gemeinsam zu befüllen und zu isolieren. Im Gegensatz zu einem Spritzgußverfahren bestehen dabei auch keine Beschränkungen hinsichtlich der Anzahl der hintereinander angeordneten Ständerbleche und damit der Länge und Größe der elektrischen Maschine.

Durch das erfindungsgemäße Verfahren wird es ermöglicht, dünnwandige Isolationen mit einer Dicke von insbesondere 0,1 mm bis 1 mm innerhalb der einzelnen Nuten der Ständerbleche zu erzeugen, wobei die Ständerbleche in ihrer aufeinanderfolgenden Anordnung eine praktisch beliebige Länge erreichen können und es damit insbesondere ermöglicht wird, auch Großmotoren herzustellen.

Das Verhältnis von Wanddicke zur Länge des Bauteils kann dabei insbesondere den Faktor 2,5 x 10⁻³ unterschreiten (also z.B. ein Bauteil mit einer Wanddicke von 0,3 mm und einer Länge von über 120 mm), so daß sehr dünnwandige und gleichzeitig sehr lange Bauteile wirtschaftlich herstellbar sind.

Das erfindungsgemäße dünnwandige Bauteil, welches nach dem beschriebenen Verfahren hergestellt wird, kann hinsichtlich der Minimierung der Wanddicke und der Maximierung der Länge des jeweiligen Bauteils praktisch beliebig gestaltet werden. Durch das erfindungsgemäße Verfahren kann auch die Wanddicke des dünnwandigen Bauteils unterschiedlich gestaltet und genau modelliert werden.

Die erfindungsgemäße dünnwandige Isolation aus urformbarem Material in Nuten von Ständerblechen kann zeitsparend hergestellt werden, ohne daß eine Beschränkung hinsichtlich der Motorengröße und damit der Anzahl der hintereinander angeordneten Ständerbleche vorliegt. Das bislang erforderliche aufwendige Isolieren und Handling von Ständerblechen kann somit entfallen.

Beim erfindungsgemäßen Werkzeugsystem sind zumindest ein erstes und zweites formgebendes Werkzeug (ggf. auch weitere Werkzeuge) vorgesehen, welche in einer Relativbewegung zueinander angenähert werden können. In der Endposition ist zwischen dem Außenbereich des weiteren formgebenden Werkzeugs und dem Innenbereich des Hohlraums (des im ersten formgebenden Werkzeug eingelegten Bauteils oder des ersten formgebenden Werkzeugs selbst) ein beliebig dimensionierbarer Spaltbereich vorgesehen, welcher die dünne Wand des dünnschichtigen Bauteils darstellt.

Die Erfindung ist anhand von Ausführungsbeispielen in den Zeichnungsfiguren näher erläutert. Es zeigen:
- Fig. 1: ein mit urformbarem Material befüllter Hohlraum eines ersten formgebenden Werkzeugs,
- Fig. 2: ein Werkzeug nach Fig. 1 mit teilweise eingedrungenem weiteren formgebenden Werkzeug unter teilweiser Materialverdrängung,
- Fig. 3: das Werkzeug nach Fig. 1 nach Entfernung des weiteren formgebenden Werkzeugs mit einer angebrachten umlaufenden Wandschicht,
- Fig. 4: eine schematische Darstellung eines Pakets von Ständerblechen einer elektrischen Maschine mit Nuten zur Anbringung von Isolation sowie
- Fig. 5: eine vergrößerte Darstellung A aus Fig. 4.

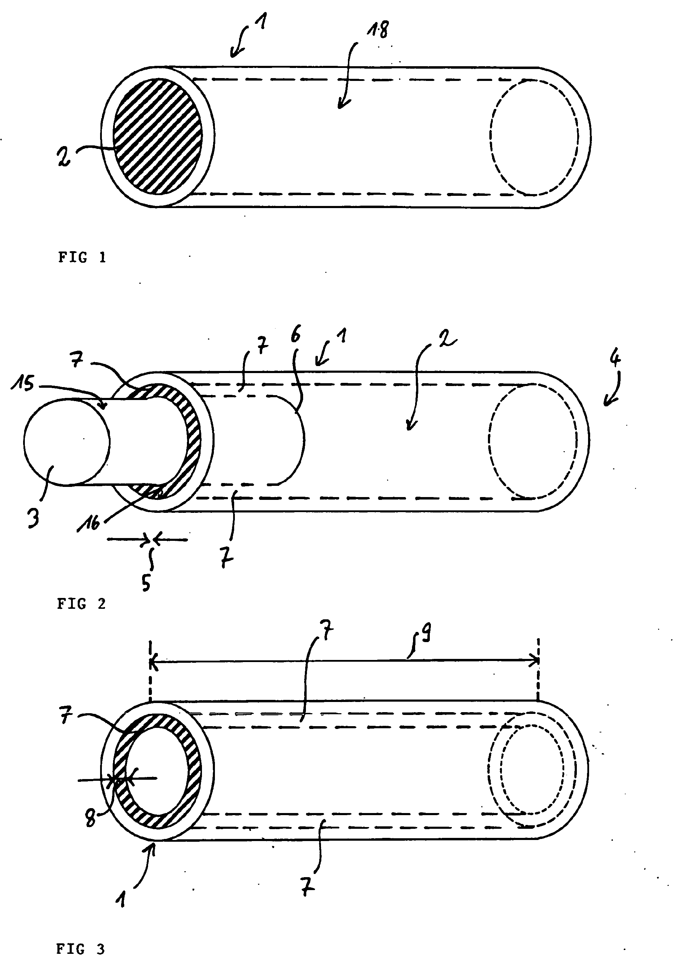

Aus den Fig. 1 - 3 gehen verschiedene Verfahrensschritte des erfindungsgemäßen Verfahrens hervor.

Fig. 1 zeigt in schematischer Darstellung ein (äußeres) formgebendes Werkzeug 1 (hier: einen Hohlzylinder), der gemäß dem ersten Verfahrensschritt vollständig und damit auch im inneren Hohlraum 18 mit (flüssigem) geschmolzenem urformbarem Material 2 gefüllt wird.

Als nächster Verfahrensschritt wird gemäß Fig. 2 über ein weiteres formgebendes Werkzeug 3 (hier: einen Stempel) eine Bewegung in das formgebende Werkzeug hinein ausgeführt, wodurch das dort befindliche urformbare Material 2 verdrängt wird und z.B. an der Rückseite 4 des formgebenden Werkzeug 1 oder an einer anderen Stelle heraustreten kann.

Fig. 2 zeigt die formgebenden Werkzeuge 1 und 3, die in einer Relativbewegung in Richtung 5 aufeinander zu bewegt wurden, in einer mittleren Verfahrensposition. Am vorderen Endbereich 6 des formgebenden Werkzeugs 3 wird das urformbare Material 2 verdrängt. Wenn das weitere formgebende Werkzeug 3 vollständig durch das formgebende Werkzeug 1 hindurch geführt ist, ergibt sich durch vollständigen Materialabtrag des urformbaren Materials 2 zwischen einem Außenwandbereich 15 des weiteren formgebenden Werkzeugs 3 und einem Innenwandbereich 16 des formgebenden Werkzeugs 1 eine beliebig dünnwandig gestaltbare Wandschicht 7, welche aus dem ersten formgebenden Werkzeug 1 als Hülse entfernt werden kann.

Die Geometrie der Wandschicht 7 (z.B. deren Dicke 8) kann in Abhängigkeit von der Formgestaltung des weiteren formgebenden Werkzeugs 3 individuell gestaltet werden. So können auch bereichweise unterschiedlichen Dicken 8 realisiert werden. Das erfindungsgemäße Verfahren ist hinsichtlich der Länge 9 des entstehenden Bauteils keinen Beschränkungen unterworfen. Im Gegensatz zum Spritzgußverfahren, bei dem aufgrund eingeschränkter Fließfähigkeit der verwendeten Materialien nur eine begrenzte Spritztiefe vorliegt, kann mit dem vorgeschlagenen Verfahren eine praktisch beliebige Kombination von Minimierung der Wanddicke 7 und Maximierung der Länge 9 des Bauteils realisiert werden.

Die Relativbewegung kann dabei entweder durch Bewegung des ersten formgebenden Werkzeugs 1 oder des weiteren formgebenden Werkzeugs 3 oder beider formgebenden Werkzeuge 1 und 3 erreicht werden. Ferner kann neben einer linearen Bewegung auch eine Drehbewegung oder eine Rüttelbewegung eines Werkzeugs 1 und/oder 3, insbesondere des Werkzeugs 3 stattfinden.

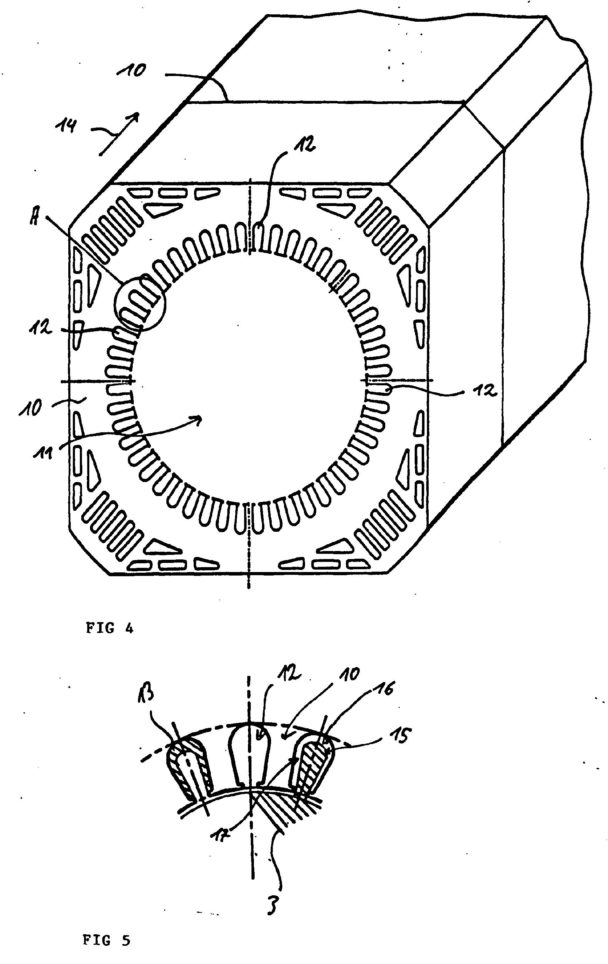

Fig. 4 zeigt ein an sich bekanntes Ständerblech 10 einer elektrischen Maschine mit Rotoröffnung 11. Das Ständerblech 10 besitzt um laufend eine Vielzahl von Nuten 12, in welche gemäß der vergrößerten Darstellung A nach Fig. 5 Isolationen 13 eingebracht werden müssen.

Gemäß Fig. 4 sind eine Mehrzahl von nicht einzeln dargestellten Ständerblechen 10 zum Aufbau der Motorlänge hintereinander angeordnet. Dabei wird gemäß dem Stand der Technik eine in den Nuten 12 anzubringende Isolation ("Nutkastenisolation") zwischen der in den Nuten 12 aufgenommenen Ständerwicklung (nicht abgebildet) und den Ständerblechen 10 bisher durch mehrschichtige Isolationspapiere realisiert, weiche zugeschnitten, gefaltet und mit Sondermaschinen einzelnen in den jeweiligen Nuten 12 angebracht werden müssen.

Durch das erfindungsgemäße Verfahren kann eine Isolation 13 (z.B. aus Polycarbonat) gemäß Fig. 5 durch die erfindungsgemäßen Verfahrensschritte realisiert werden. Dabei können sämtliche umlaufend angeordneten Nuten 12 eines Ständerblechs 10 in einem Verfahrensschritt gleichzeitig erzeugt und für eine beliebige Anordnung von Ständerblechen 10, welche in Richtung 14 hintereinander angeordnet sind, realisiert werden.

Fig. 5 zeigt auch in einer Teilschnittdarstellung ein weiteres formbares Werkzeug 3, mit umlaufend angeordneten Außenwandbereichen 15, die über Spaltbereiche 17 von den Innenwandbereichen 16 der umlaufend angeordneten Nuten 12 von in einem ersten formgebenden Werkzeug 1 hintereinander eingelegten Ständerblechen 10 einer elektrischen Maschine beabstandet sind.

In Fig. 5 ist dabei nur ein einziger Außenwandbereich 15 abgebildet, tatsächlich entspricht die Anzahl der umlaufend am Werkzeug 3 angeordneten Außenwandbereiche 15 der Anzahl der mit einer dünnwandigen Isolation 13 zu versehenden Nuten 12.

### BEZUGSZEICHEN

- 1: formgebendes Werkzeug
- 2: urformbares Material
- 3: formgebendes Werkzeug
- 4: Richtung
- 5: Rückseite
- 6: Endbereich
- 7: Wandschicht
- 8: Dicke
- 9: Länge
- 10: Ständerblech
- 11: Rotor
- 12: Nut
- 13: Isolation
- 14: Richtung
- 15: Außenwandbereich
- 16: Innenwandbereich
- 17: Spaltbereich
- 18: Hohlraum

## Patentansprüche

1. Verfahren zur Herstellung einer dünnwandigen Isolation aus urformbarem Material in Nuten (12) von Ständerblechen (10) einer elektrischen Maschine durch Relativbewegung eines ersten (1) und eines weiteren (3) formgebenden Werkzeugs mit umlaufend angeordneten Außenwandbereichen (15) zueinander, mit folgenden Verfahrensschritten:
- Befüllen eines Hohlraums(18) sowie von Nuten (12) von im ersten formgebenden Werkzeug (1) eingelegten Ständerblechen (10) der elektrischen Maschine mit fließfähigem urformbarem Material,
- Relativbewegung des ersten (1) und des weiteren (3) formgebenden Werkzeugs zueinander unter teilweiser Verdrängung des urformbaren Materials, wobei sich zwischen dem Außenwandbereich (15) des weiteren formgebenden Werkzeugs (3) und den Nuten (12) Spaltbereich (17) befinden.

2. Verfahren nach Anspruch 1, wobei das urformbare Material den Hohlraum nach dem Befüllen vollständig ausfüllt.

3. Verfahren nach Anspruch 1, wobei das urformbare Material den Hohlraum nach dem Befüllen teilweise ausfüllt.

4. Verfahren nach Anspruch 3, wobei durch Relativbewegung des ersten (1) und des weiteren (3) formgebenden Werkzeugs zueinander eine Verdrängung des dort befindlichen urformbaren Materials in einen Spaltbereich (17) zwischen einem Innenwandbereich (16) des Hohlraums und einem Außenwandbereich (15) des weiteren formgebenden Werkzeugs erfolgt.

5. Verfahren nach einem der vorhergehenden Ansprüche, wobei durch Relativbewegung des ersten (1) und des weiteren (3) formgebenden Werkzeugs zueinander ein Film des urformbaren Materials in einen Spaltbereich (17) zwischen einem Innenwandbereich (16) des Hohlraums und einem Außenwandbereich (15) des weiteren formgebenden Werkzeugs (3) hineingezogen wird.

6. Verfahren nach einem der vorhergehenden Ansprüche, wobei eine Nacheinspeisung von zusätzlichem urformbaren Material erfolgt.

7. Verfahren nach einem der Ansprüche 1 - 6 zur Einbringung von dünnwandigen Isolationen aus urformbarem Material in Nuten von Ständerblechen einer elektrischen Maschine, wobei die Nuten einer Mehrzahl von im ersten formgebenden Werkzeug hintereinander angeordneten Ständerblechen einen mit urformbarem Material befüllbaren Hohlraum bilden.

8. Elektrischen Maschine, aufweisend eine dünnwandige Isolation aus urformbaren Material in Nuten (12) von Ständerblechen (10), hergestellt nach einem Verfahren nach einem der Ansprüche 1 - 7.

9. Werkzeugsystem bestehend aus einem ersten formgebenden Werkzeug (1) und einem weiteren formgebendem Werkzeug (3), wobei das erste und das weitere formgebende Werkzeug (1,3) relativ zueinander verschiebbar sind, zur Herstellung einer dünnwandigen Isolation aus urformbarem Material nach einem Verfahren nach einem der Ansprüche 1 - 7.

10. Werkzeugsystem nach Anspruch 9, mit einem weiteren formgebendem Werkzeug (3) mit umlaufend angeordneten Außenwandbereichen (15), die über Spaltbereiche (17) von den Innenwandbereichen (16) umlaufend angeordneter Nuten (12) von in einem ersten formgebenden Werkzeug (1) hintereinander eingelegten Ständerblechen (10) einer elektrischen Maschine beabstandet sind.

## Claims

1. Process for manufacturing a thin-walled insulating structure composed of mouldable material in slots (12) of stator laminations (10) of an electrical machine by the movement of a first shaping tool (1) and of a further shaping tool (3) with circumferentially arranged exterior wall areas (15) relative to one another, having the following process steps:
- filling a hollow space (18) and slots (12) of stator laminations (10) of the electrical machine, which are placed in the first shaping tool (1), with free-flowing, mouldable material,
- moving the first shaping tool (1) and the further shaping tool (3) relative to one another with partial displacement of the mouldable material, wherein gap regions (17) are located between the exterior wall area (15) of the further shaping tool (3) and the slots (12).

2. Process according to Claim 1, wherein the mouldable material completely fills the hollow space after the filling step.

3. Process according to Claim 1, wherein the mouldable material partially fills the hollow space after the filling step.

4. Process according to Claim 3, wherein the movement of the first shaping tool (1) and of the further shaping tool (3) relative to one another displaces the mouldable material located therein into a gap region (17) between an interior wall area (16) of the hollow space and an exterior wall area (15) of the further shaping tool.

5. Process according to one of the preceding claims, wherein the movement of the first shaping tool (1) and of the further shaping tool (3) relative to one another attracts a film of the mouldable material into a gap region (17) between an interior wall area (16) of the hollow space and an exterior wall area (15) of the further shaping tool (3).

6. Process according to one of the preceding claims, wherein additional mouldable material is subsequently fed in.

7. Process according to one of Claims 1-6 for introducing thin-walled insulating structures composed of mouldable material into slots of stator laminations of an electrical machine, wherein the slots of a plurality of stator laminations arranged behind one another in the first shaping tool form a hollow space which can be filled with mouldable material.

8. Electrical machine, having a thin-walled insulating structure composed of mouldable material in slots (12) of stator laminations (10), manufactured according to a process according to one of Claims 1-7.

9. Tool system comprising a first shaping tool (1) and a further shaping tool (3), wherein the first and the further shaping tools (1, 3) can be displaced relative to one another, in order to manufacture a thin-walled insulating structure composed of mouldable material according to a process according to one of Claims 1-7.

10. Tool system according to Claim 9, having a further shaping tool (3) with circumferentially arranged exterior wall areas (15) which are spaced apart by means of gap regions (17) from the interior wall areas (16) of circumferentially arranged slots (12) of stator laminations (10), which are placed behind one another in a first shaping tool (1), of an electrical machine.

## Revendications

1. Procédé de fabrication d'une structure isolante à paroi mince en matière intrinsèquement formable dans des encoches (12) de tôles de stator (10) d'une machine électrique par un déplacement relatif l'un par rapport à l'autre d'un premier outil de formage (1) et d'un autre outil de formage (3) avec des zones de paroi extérieure (15) disposées en rotation, comprenant les étapes de procédé suivantes:
- remplissage d'un espace creux (18) ainsi que d'encoches (12) de tôles de stator (10) de la machine électrique déposées dans le premier outil de formage (1) avec une matière coulante intrinsèquement formable,
- déplacement relatif du premier (1) et de l'autre (3) outils de formage l'un par rapport à l'autre avec déplacement partiel de la matière intrinsèquement formable, dans lequel il se trouve des régions d'écartement (17) entre la zone de paroi extérieure (15) de l'autre outil de formage (3) et les encoches (12).

2. Procédé selon la revendication 1, dans lequel la matière intrinsèquement formable remplit entièrement l'espace creux après le remplissage.

3. Procédé selon la revendication 1, dans lequel la matière intrinsèquement formable remplit partiellement l'espace creux après le remplissage.

4. Procédé selon la revendication 3, dans lequel on produit, par un déplacement relatif du premier (1) et de l'autre (3) outils de formage l'un par rapport à l'autre, un déplacement de la matière intrinsèquement formable qui s'y trouve dans une région d'écartement (17) entre la zone de paroi intérieure (16) de l'espace creux et une zone de paroi extérieure (15) de l'autre outil de formage (3).

5. Procédé selon l'une quelconque des revendications précédentes, dans lequel on forme, par un déplacement relatif du premier (1) et de l'autre (3) outils de formage l'un par rapport à l'autre un film de la matière intrinsèquement formable dans une région d'écartement (17) entre une zone de paroi intérieure (16) de l'espace creux et une zone de paroi extérieure (15) de l'autre outil de formage (3).

6. Procédé selon l'une quelconque des revendications précédentes, dans lequel on procède à une alimentation complémentaire de matière intrinsèquement formable supplémentaire.

7. Procédé selon l'une quelconque des revendications 1 à 6, pour l'introduction de structures isolantes à paroi mince en matière intrinsèquement formable dans des encoches de tôles de stator d'une machine électrique, dans lequel les encoches d'une pluralité de tôles de stator disposées l'une derrière l'autre dans le premier outil de formage forment un espace creux qui peut être rempli par une matière intrinsèquement formable.

8. Machine électrique, présentant une structure isolante à paroi mince en matière intrinsèquement formable dans des encoches (12) de tôles de stator (10), fabriquée par un procédé selon l'une quelconque des revendications 1 à 7.

9. Système d'outillage composé d'un premier outil de formage (1) et d'un autre outil de formage (3), dans lequel le premier et l'autre outils de formage (1, 3) peuvent être déplacés l'un par rapport à l'autre, pour la fabrication d'une structure isolante à paroi mince en matière intrinsèquement formable par un procédé selon l'une quelconque des revendications 1 à 7.

10. Système d'outillage selon la revendication 9, avec un autre outil de formage (3) comportant des zones de paroi extérieure (15) disposées en mouvement de rotation, qui sont espacées par des régions d'écartement (17) des zones de paroi intérieure (16) d'encoches (12), disposées en mouvement de rotation, de tôles de stator (10) d'une machine électrique disposées l'une derrière l'autre dans un premier outil de formage (1).
